# EUROPEAN PATENT SPECIFICATION

(11) **EP 3 450 686 B1**
(45) Date of publication and mention of the grant of the patent: **16.12.2020**
(21) Application number: 18192118.0
(22) Date of filing: 31.08.2018
(51) Int. Cl.: F01D 5/18, F01D 5/28, F01D 9/04

(54) **TURBINE VANE CLUSTER INCLUDING ENHANCED PLATFORM COOLING**
TURBINENSCHAUFEL-CLUSTER MIT VERBESSERTER PLATTFORMKÜHLUNG
GROUPE D'AUBES DE TURBINE À REFROIDISSEMENT DE PLATE-FORME AMÉLIORÉ

(30) Priority: 01.09.2017 US 201762553445 P; 23.10.2017 US 201715790423
(43) Date of publication of application: 06.03.2019
(73) Proprietor: United Technologies Corporation, Farmington, CT 06032 (US)
(72) Inventor: McMAHON, Shawn M., West Hartford, CT Connecticut 06110 (US); WHITFIELD, Christopher, Manchester, CT Connecticut 06040 (US); ANDERSON, Kristopher K., Manchester, CT Connecticut 06042 (US); MORAN, Jason B., Wilbraham, MA Massachusetts 01095 (US); BARTLING, Brett Alan, Monroe, CT Connecticut 06468 (US); PERRON, Christopher, Tolland, CT Connecticut 06084 (US); ANIELLO, Justin M., Ellington, CT Connecticut 06029 (US); TANNER, Stephanie, Colchester, CT Connecticut 06415 (US)
(74) Representative: Dehns

(56) References cited:
- EP-A2- 1 849 965
- WO-A1-94/17285
- WO-A1-2013/188869
- WO-A1-2014/143263
- JP-A- 2001 059 402
- US-A1- 2007 084 052

## Description

### TECHNICAL FIELD

The present disclosure relates generally to vane clusters for a gas turbine engine, and more specifically to an enhanced cooling system for a vane cluster of a gas turbine engine.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. The turbine section is connected to the compressor section via a shaft, and rotation of the turbine section further drives the compressor section to rotate. In some examples, a fan is also connected to the shaft and is driven to rotate via rotation of the turbine as well.

Each of the compressor and the turbine sections include multiple stages, with each stage being constructed of a ring of rotating rotor blades paired with a ring of static vanes. In some examples, the static vanes are constructed of clusters, where multiple circumferentially adjacent vanes in a given stage are a single integral component. Each integral component is referred to as a cluster.

During operation, the compressor and turbine sections are exposed to high operating temperatures. In some cases the high operating temperatures are mitigated via the use of active cooling systems that pass cooling air through the static vanes. The cluster construction can, in some examples, result in inbound regions between the vanes in a single cluster that are difficult to cool using conventional cooling systems.

WO 94/17285 A1 discloses a turbine vane having dedicated inner platform cooling.

### SUMMARY

The present invention provides a vane cluster for a gas turbine engine as set forth in claim 1.

In an example of the above described vane cluster for a gas turbine engine the first vane and the second vane are immediately adjacent to each other.

In another example of any of the above described vane clusters for a gas turbine engine the feed hole as a diameter in the range of 0.060-0.100 inches (1.524-2.54 mm).

In another example of any of the above described vane clusters for a gas turbine engine the feed hole has a diameter of 0.080 inches (2.032 mm).

In another example of any of the above described vane clusters for a gas turbine engine the plurality of film cooling holes comprises five to fifteen film cooling holes.

In another example of any of the above described vane clusters for a gas turbine engine the plurality of film cooling holes consists of ten film cooling holes.

In another example of any of the above described vane clusters for a gas turbine engine the plurality of film cooling holes are distributed evenly across the inner diameter platform at the plenum.

In another example of any of the above described vane clusters for a gas turbine engine the core cooling cavity is one of a plurality of core cooling cavities in the corresponding vane.

Another example of any of the above described vane clusters for a gas turbine engine further includes a baffle disposed within the corresponding vane, the baffle including a plurality of inboard to outboard cooling fluid holes configured to provide cooling fluid from an outboard compressor bleed to the core cooling cavity of the corresponding vane.

In another example of any of the above described vane clusters for a gas turbine engine the plenum comprises a void in the inner platform and a cover attached to an opening in the void.

In another example of any of the above described vane clusters for a gas turbine engine the cover is characterized by a lack of openings.

In another example of any of the above described vane clusters for a gas turbine engine the opening in the void is at a radially inward facing surface of the inner platform, relative to an arc defined by the vane cluster.

In another example of any of the above described vane clusters for a gas turbine engine the plurality of vanes consists of the first vane and the second vane.

A gas turbine engine according to another disclosed non-limiting embodiment includes a compressor section, a combustor section fluidly connected to the compressor section, a turbine section fluidly connected to the combustor section, the turbine section include a plurality of stages, at least one of the stages including a vane ring comprising multiple circumferentially adjacent vane clusters, wherein each of the vane clusters includes an inner diameter platform, an outer diameter platform, a plurality of vanes spanning from the inner diameter platform to the outer diameter platform, an inbound region defined between a first vane and a second vane of the plurality of vanes, a plenum defined in the inner diameter platform at the inbound region, the plenum including a plurality of film cooling holes fluidly connecting the plenum to a primary flowpath, and a feed hole connecting the plenum to a core cooling cavity of one of the first vane and the second vane to the plenum.

In an example of the above described gas turbine engine the first vane and the second vane are immediately adjacent to each other.

In another example of any of the above described gas turbine engines the feed hole as a diameter in the range of 0.060-0.100 inches (1.524-2.54 mm).

In another example of any of the above described gas turbine engines the feed hole has a diameter of 0.080 inches (2.032 mm).

In another example of any of the above described gas turbine engines the plurality of film cooling holes consists of ten film cooling holes.

Another example of any of the above described gas turbine engines further includes a baffle disposed within the corresponding vane, the baffle including a plurality of inboard to outboard cooling fluid holes configured to provide cooling fluid from an outboard compressor bleed to the core cooling cavity of the corresponding vane.

In another example of any of the above described gas turbine engines the plenum comprises a void in the inner platform and a cover attached to an opening in the void.

In another example of any of the above described gas turbine engines the cover is characterized by a lack of openings.

### BRIEF DESCRIPTION OF THE DRAWINGS

Figure 1 illustrates a high level schematic view of an exemplary gas turbine engine.
Figure 2 schematically illustrates an axial view of a vane cluster including two vanes.
Figure 3 schematically illustrates a radially inward cross sectional view of the vane cluster of Figure 1 along cross sectional line A-A.
Figure 4 schematically illustrates a zoomed in view of an inbound region of an inner diameter platform of the vane cluster of Figure 3.
Figure 5 schematically illustrates a radially outward facing view, of the inner diameter platform of Figure 4.
Figure 6 schematically illustrates a view of a feed hole for providing cooling air to an inbound cooling region plenum.

### DETAILED DESCRIPTION OF AN EMBODIMENT

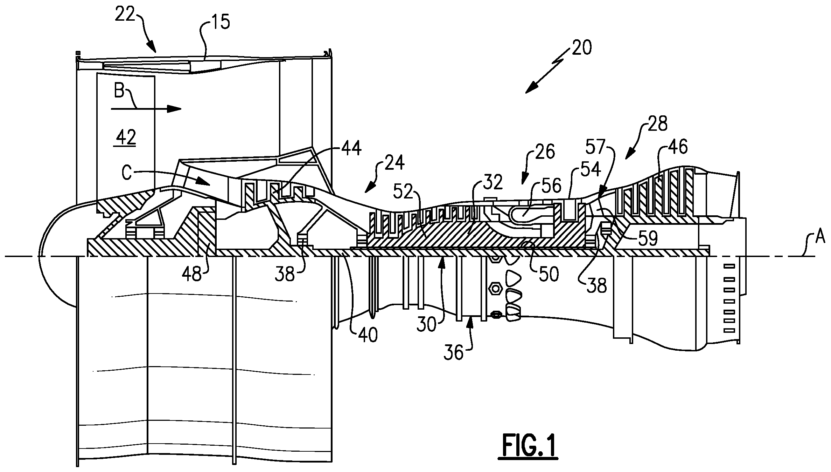

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = K x 9/5). The "Low corrected fan tip speed" as disclosed herein according to one non-limiting embodiment is less than about 1150 ft / second (350.5 meters/second).

In some examples, each of the compressor stages and/or turbine stages includes multiple vanes configured as vane clusters. The vane clusters are single integral components including an outer diameter platform, an inner diameter platform, and two or more vanes spanning from the inner diameter platform to the outer diameter platform. The vane clusters are arranged in a ring with each vane cluster being adjacent to two other vane clusters in order to form the completed stage. Defined between the vanes in each vane cluster is an inbound region. When the vane cluster includes more than two vanes, an inbound region is defined between each adjacent vane in a single vane cluster. In some example engines, it can be necessary to provide cooling air to the inbound region.

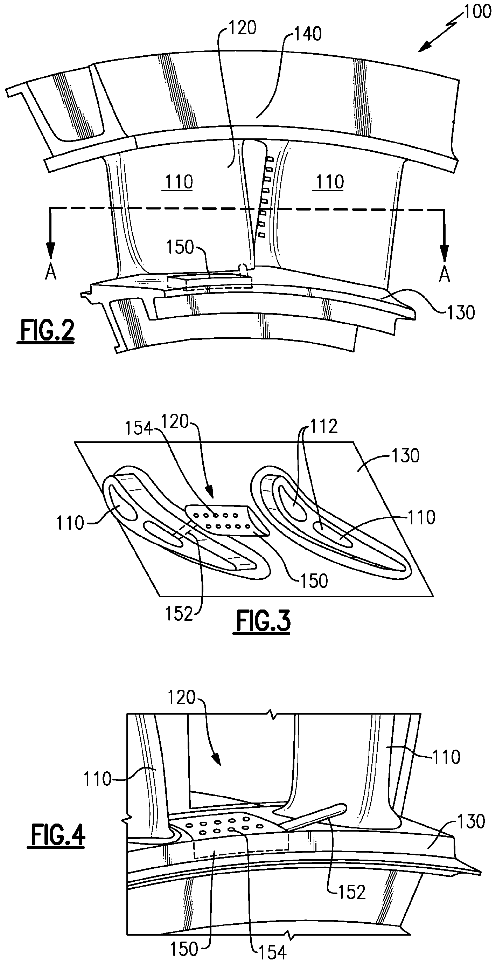

Figures 2-6 schematically illustrate an exemplary cooling scheme for providing cooling to an inbound region 120 of a vane cluster 100 according to one embodiment. It should be appreciated that the illustrated cooling scheme can be applied to vane clusters including three, four, or any other number of additional vanes 110, with the illustrated features being positioned in each of the inbound regions 120 between vanes 110 of the vane cluster 100.

With initial regards to the example illustrated in Figure 2, each of the vane clusters 100 includes two vanes 110 and an inbound region 120 defined between the two vanes 110. The vanes 110 span from an inner diameter platform 130 to an outer diameter platform 140. In order to cool the inner diameter platform 130 in the inbound region 120, a plenum 150 is disposed within the inner diameter platform 130 in the inbound region 120. The plenum 150 is connected to a cooling flow within one of the vanes 110 via a feed hole 152 (illustrated in Figure 3). In one example the feed hole 152 is approximately 0.080 inches (2.032 mm) in diameter, and connects a trailing edge core passage of the corresponding vane 110 to the plenum 150. In another example, the feed hole 152 has a diameter in the range of 0.070 to 0.090 inches (1.778-2.286 mm).

The plenum 150 includes multiple film cooling holes 154. The film cooling holes 154 vent the cooling fluid from the plenum 150 into the primary flowpath at the inbound region 120. The vented cooling air provides a cooling film along the flowpath surface of the inner diameter platform 130 in the inbound region 120. In the illustrated example there are ten film cooling holes 154 distributed across the plenum 150. In alternative examples, five to fifteen film cooling holes 154 can be utilized.

With continued reference to Figure 2, and with like numerals indicating like elements, Figure 3 schematically illustrates a cross sectional view of the cluster 100 from a radially outward viewpoint. Each of the vanes 110 in the cluster 100 includes multiple internal cooling passages, referred to as cores 112. While illustrated herein as including two cores 112, it should be appreciated that any number of additional cores 112, and cooling holes, can be included within the vane 110, depending on the specific needs and configuration of the vane 110.

The feed hole 152 connects the trailing edge core 112 from one of the adjacent vanes 110 to the plenum 150, thereby providing cooling fluid to the plenum 150. The film cooling holes 154 are holes connecting a radially outward facing surface of the inner diameter platform 130 to the plenum 150. The film cooling holes 154 can be cast cooling holes, machined cooling holes, or a combination of cast and machined holes. Further, in some examples, the film cooling holes 154 are distributed evenly cross the inbound region 120. In alternative examples, the film cooling holes 154 are distributed unevenly, and are concentrated in specific areas of the inner diameter platform 130 within the inbound regions 120 that need additional cooling. In yet further examples, some or all of the film cooling holes 154 are shaped cooling holes including a central passage and a diffuser portion.

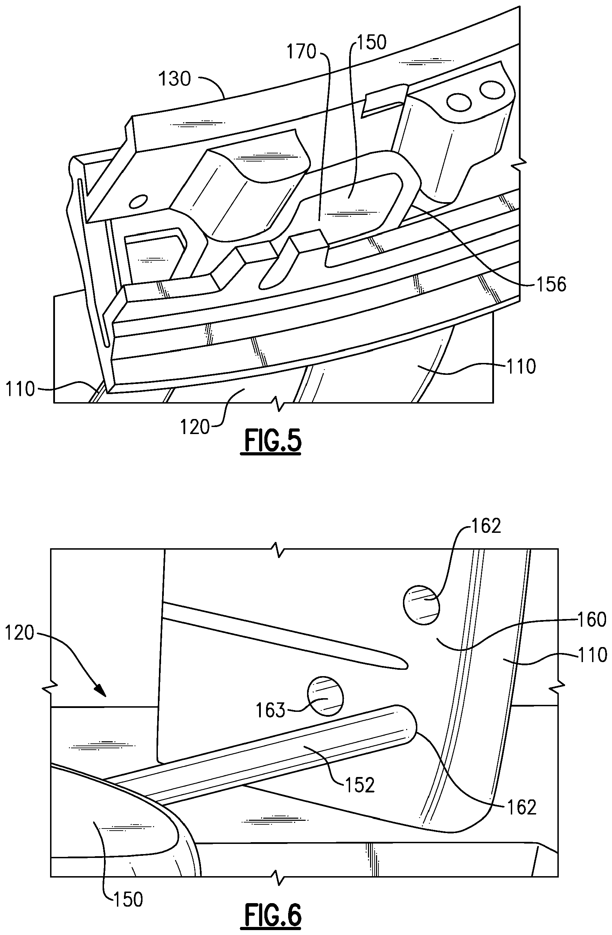

With continued reference to Figures 2 and 3, and with like numerals indicating like elements, Figure 4 schematically illustrates an isometric view of the inbound region 120 of the inner diameter platform 130 in greater detail. Similarly, Figure 5 schematically illustrates a radially inner surface of the inner diameter platform 130 at the inbound region 120. In the example vane cluster 100 of Figure 4, the plenum 150 is created as a void with an opening to a radially inward facing surface 156 of the inner diameter platform 130. The void can be a cast void that is cast simultaneously with the vane cluster 100, a void milled into the vane cluster 100 after casting, or a combination of the two. In order to enclose the plenum 150, a cover 170 is disposed over the plenum 150 at a plenum opening on a radially inward facing portion of the inner diameter platform 130.

In one example the cover 170 is a solid sheet of material, and does not include any openings, thereby forcing all cooling air entering the plenum 150 to be vented through the film cooling holes 154. In another example, the cover 170 can include one or more holes, thereby metering the volume of cooling air provided through the film cooling holes 154. The cover 170 can be attached to the void using any attachment means including welding, brazing, adhesives, fasteners, and the like. In one example, the cover 170 is approximately 0.020 inches (0.508mm) thick. In alternative examples, the cover 170 can be in the range of 0.010 to 0.030 inches (0.254-0.762 mm) thick.

While illustrated in the exemplary embodiment as a single plenum 150, it is contemplated that the plenum 150 can alternatively be provided in the form of multiple connected chambers, a serpentine passage, or any other similar opening.

With continued reference to Figures 2-5, Figure 6 schematically illustrates an exemplary zoomed in view of the feed hole 152 connecting the vane 110 to the plenum 150. Also illustrated is an interior view of the vane 110 connected to the feed hole 152.

Interior to the vane 110 providing cooling fluid to the plenum 150 is a baffle 160. The baffle 160 includes two radially oriented rows of outboard to inboard baffle holes 162, one row on each side of the baffle 160. On one side for the baffle 160, the inboard region contains an additional hole 163 located axially aft of the inboard most hole of row 162. Hole 163 provides additional cooling to the inboard region of vane 110 in order to compensate for the air removed from the interior cooling system of the vane by the feed hole 152. Thus, the baffle holes 162 and 163 allow for adequate pressure to be maintained within the cooling system of the vane 110. In some examples the baffle holes 162, 163 are approximately 0.078 inches (1.98 mm) in diameter. The baffle 160 and baffle holes 162 and 163 efficiently provide air from an outboard compressor bleed to the interior cooling system of the vane 110.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the scope of the invention is determined by the claims.

## Claims

1. A vane cluster (100) for a gas turbine engine (20) comprising:
an inner diameter platform (130);
an outer diameter platform (140);
a plurality of vanes (110) spanning from the inner diameter platform (130) to the outer diameter platform (140);
an inbound region (120) defined between a first vane (110) and a second vane (110) of the plurality of vanes (110);
a plenum (150) defined in the inner diameter platform (130) at the inbound region (120), the plenum (150) including a plurality of film cooling holes (154) fluidly connecting the plenum (150) to a primary flowpath; and
a feed hole (152) connecting the plenum (150) to a core cooling cavity (112) of the first vane (110) or the second vane (110), wherein the core cooling cavity (112) is a trailing edge core cooling cavity (112).

2. A gas turbine engine (20) comprising:
a compressor section (24);
a combustor section (26) fluidly connected to the compressor section (24);
a turbine section (28) fluidly connected to the combustor section (26), the turbine section (28) include a plurality of stages, at least one of said stages including a vane ring comprising multiple circumferentially adjacent vane clusters (100) as set forth in claim 1.

3. The vane cluster (100) or gas turbine engine (20) of claim 1 or 2, wherein the first vane (110) and the second vane (110) are immediately adjacent to each other.

4. The vane cluster (100) or gas turbine engine (20) of any of claims 1 to 3, wherein the feed hole (152) has a diameter in the range of 1.524-2.54 mm (0.060-0.100 inches) .

5. The vane cluster (100) or gas turbine engine (20) of claim 4, wherein the feed hole (152) has a diameter of 2.032 mm (0.080 inches).

6. The vane cluster (100) or gas turbine engine (20) of any preceding claim, wherein the plurality of film cooling holes (154) consists of five to fifteen film cooling holes (154).

7. The vane cluster (100) or gas turbine engine (20) of claim 6, wherein the plurality of film cooling holes (154) consists of ten film cooling holes (154).

8. The vane cluster (100) or gas turbine engine (20) of any preceding claim, wherein the plurality of film cooling holes (154) are distributed evenly across the inner diameter platform (130) at the plenum (150).

9. The vane cluster (100) or gas turbine engine (20) of any preceding claim, wherein the core cooling cavity (112) is one of a plurality of core cooling cavities (112) in the corresponding vane (110).

10. The vane cluster (100) or gas turbine engine (20) of any preceding claim, further comprising a baffle (160) disposed within the corresponding vane (110), the baffle (160) including a plurality of inboard to outboard cooling fluid holes (162, 163) configured to provide cooling fluid from an outboard compressor bleed to the core cooling cavity (112) of the corresponding vane (110).

11. The vane cluster (100) or gas turbine engine (20) of any preceding claim, wherein the plenum (150) comprises a void in the inner platform (130) and a cover (170) attached to an opening in the void.

12. The vane cluster (100) or gas turbine engine (20) of claim 11, wherein the cover (170) has no openings.

13. The vane cluster (100) or gas turbine engine (20) of claim 11 or 12, wherein the opening in the void is at a radially inward facing surface (156) of the inner platform (130).

14. The vane cluster (100) or gas turbine engine (20) of any preceding claim, wherein the plurality of vanes (110) consists of the first vane (110) and the second vane (110).

## Patentansprüche

1. Leitschaufel-Cluster (100) für ein Gasturbinentriebwerk (20), umfassend:
eine Innendurchmesserplattform (130);
eine Außendurchmesserplattform (140);
eine Vielzahl von Leitschaufeln (110), die sich von der Innendurchmesserplattform (130) zur Außendurchmesserplattform (140) erstrecken;
einen nach innen gerichteten Bereich (120), der zwischen einer ersten Leitschaufel (110) und einer zweiten Leitschaufel (110) aus der Vielzahl von Leitschaufeln (110) definiert ist;
einen Zwischenraum (150), der in der Innendurchmesserplattform (130) an dem nach innen gerichteten Bereich (120) definiert ist, wobei der Zwischenraum (150) eine Vielzahl von Filmkühllöchern (154) beinhaltet, die eine Fluidverbindung vom Zwischenraum (150) zu einem primären Strömungsweg herstellen; und
ein Transportloch (152), das den Zwischenraum (150) mit einem Kernkühlhohlraum (112) der ersten Leitschaufel (110) oder der zweiten Leitschaufel (110) verbindet, wobei der Kernkühlhohlraum (112) ein Hinterkanten-Kernkühlhohlraum (112) ist.

2. Gasturbinentriebwerk (20), umfassend:
einen Verdichterabschnitt (24);
einen Brennraumabschnitt (26), der in Fluidverbindung mit dem Verdichterabschnitt (24) steht;
einen Turbinenabschnitt (28), der in Fluidverbindung mit dem Brennraumabschnitt (26) steht, wobei der Turbinenabschnitt (28) eine Vielzahl von Stufen beinhaltet, wobei mindestens eine der Stufen einen Leitschaufelring beinhaltet, der mehrfache, in Umfangsrichtung angrenzende Leitschaufel-Cluster (100) nach Anspruch 1 umfasst.

3. Leitschaufel-Cluster (100) oder Gasturbinentriebwerk (20) nach Anspruch 1 oder 2, wobei die erste Leitschaufel (110) und die zweite Leitschaufel (110) unmittelbar aneinander angrenzen.

4. Leitschaufel-Cluster (100) oder Gasturbinentriebwerk (20) nach einem der Ansprüche 1 bis 3, wobei das Transportloch (152) einen Durchmesser im Bereich von 1,524-2,54 mm (0,060-0,100 Zoll) aufweist.

5. Leitschaufel-Cluster (100) oder Gasturbinentriebwerk (20) nach Anspruch 4, wobei das Transportloch (152) einen Durchmesser von 2,032 mm (0,080 Zoll) aufweist.

6. Leitschaufel-Cluster (100) oder Gasturbinentriebwerk (20) nach einem der vorstehenden Ansprüche, wobei die Vielzahl von Filmkühllöchern (154) aus fünf bis fünfzehn Filmkühllöchern (154) besteht.

7. Leitschaufel-Cluster (100) oder Gasturbinentriebwerk (20) nach Anspruch 6, wobei die Vielzahl von Filmkühllöchern (154) aus zehn Filmkühllöchern (154) besteht.

8. Leitschaufel-Cluster (100) oder Gasturbinentriebwerk (20) nach einem der vorstehenden Ansprüche, wobei die Vielzahl von Filmkühllöchern (154) gleichmäßig über die Innendurchmesserplattform (130) an dem Zwischenraum (150) verteilt ist.

9. Leitschaufel-Cluster (100) oder Gasturbinentriebwerk (20) nach einem der vorstehenden Ansprüche, wobei der Kernkühlhohlraum (112) einer aus einer Vielzahl von Kernkühlhohlräumen (112) in der entsprechenden Leitschaufel (110) ist.

10. Leitschaufel-Cluster (100) oder Gasturbinentriebwerk (20) nach einem der vorstehenden Ansprüche, ferner umfassend ein Prallblech (160), das innerhalb der entsprechenden Leitschaufel (110) angeordnet ist, wobei das Prallblech (160) eine Vielzahl von Kühlfluidlöchern (162, 163), die von innen nach außen verlaufen, beinhaltet, die so konfiguriert sind, dass sie ein Kühlfluid von einer äußeren Verdichterabzapfung zum Kernkühlhohlraum (112) der entsprechenden Leitschaufel (110) liefern.

11. Leitschaufel-Cluster (100) oder Gasturbinentriebwerk (20) nach einem der vorstehenden Ansprüche, wobei der Zwischenraum (150) eine Lücke in der inneren Plattform (130) und eine Abdeckung (170), die an einer Öffnung in der Lücke angebracht ist, umfasst.

12. Leitschaufel-Cluster (100) oder Gasturbinentriebwerk (20) nach Anspruch 11, wobei die Abdeckung (170) keine Öffnungen aufweist.

13. Leitschaufel-Cluster (100) oder Gasturbinentriebwerk (20) nach Anspruch 11 oder 12, wobei sich die Öffnung in der Lücke an einer radial nach innen weisenden Fläche (156) der inneren Plattform (130) befindet.

14. Leitschaufel-Cluster (100) oder Gasturbinentriebwerk (20) nach einem der vorstehenden Ansprüche, wobei die Vielzahl von Leitschaufeln (110) aus der ersten Leitschaufel (110) und der zweiten Leitschaufel (110) besteht.

## Revendications

1. Groupe d'aubes (100) pour un moteur à turbine à gaz (20) comprenant :
une plate-forme de diamètre interne (130) ;
une plate-forme de diamètre externe (140) ;
une pluralité d'aubes (110) s'étendant à partir de la plate-forme de diamètre interne (130) jusqu'à la plate-forme de diamètre externe (140) ;
une région entrante (120) définie entre une première aube (110) et une seconde aube (110) de la pluralité d'aubes (110) ;
un plénum (150) défini dans la plate-forme de diamètre interne (130) au niveau de la région entrante (120), le plénum (150) comportant une pluralité de trous de refroidissement par film (154) reliant de manière fluidique le plénum (150) à un trajet d'écoulement primaire ; et
un trou d'alimentation (152) reliant le plénum (150) à une cavité de refroidissement centrale (112) de la première aube (110) ou la seconde aube (110), dans lequel la cavité de refroidissement centrale (112) est une cavité de refroidissement centrale de bord de fuite (112).

2. Moteur à turbine à gaz (20) comprenant :
une section de compresseur (24) ;
une section de chambre de combustion (26) reliée de manière fluidique à la section de compresseur (24) ;
une section de turbine (28) reliée de manière fluidique à la section de chambre de combustion (26), la section de turbine (28) comporte une pluralité d'étages, au moins l'un desdits étages comportant un anneau d'aube comprenant plusieurs groupes d'aubes circonférentiellement adjacents (100) selon la revendication 1.

3. Groupe d'aubes (100) ou moteur à turbine à gaz (20) selon la revendication 1 ou 2, dans lequel la première aube (110) et la seconde aube (110) sont immédiatement adjacentes l'une à l'autre.

4. Groupe d'aubes (100) ou moteur à turbine à gaz (20) selon l'une quelconque des revendications 1 à 3, dans lequel le trou d'alimentation (152) a un diamètre compris dans la plage de 1,524-2,54 mm (0,060-0,100 pouce).

5. Groupe d'aubes (100) ou moteur à turbine à gaz (20) selon la revendication 4, dans lequel le trou d'alimentation (152) a un diamètre de 2,032 mm (0,080 pouce).

6. Groupe d'aubes (100) ou moteur à turbine à gaz (20) selon une quelconque revendication précédente, dans lequel la pluralité de trous de refroidissement par film (154) est constituée de cinq à quinze trous de refroidissement par film (154) .

7. Groupe d'aubes (100) ou moteur à turbine à gaz (20) selon la revendication 6, dans lequel la pluralité de trous de refroidissement par film (154) est constituée de dix trous de refroidissement par film (154).

8. Groupe d'aubes (100) ou moteur à turbine à gaz (20) selon une quelconque revendication précédente, dans lequel la pluralité de trous de refroidissement par film (154) sont uniformément distribués sur la plate-forme de diamètre interne (130) au niveau du plénum (150).

9. Groupe d'aubes (100) ou moteur à turbine à gaz (20) selon une quelconque revendication précédente, dans lequel la cavité de refroidissement centrale (112) est l'une d'une pluralité de cavités de refroidissement centrales (112) dans l'aube correspondante (110).

10. Groupe d'aubes (100) ou moteur à turbine à gaz (20) selon une quelconque revendication précédente, comprenant en outre un déflecteur (160) disposé à l'intérieur de l'aube correspondante (110), le déflecteur (160) comportant une pluralité de trous de fluide de refroidissement de l'intérieur vers l'extérieur (162, 163) conçus pour fournir un fluide de refroidissement à partir d'une purge de compresseur extérieure jusqu'à la cavité de refroidissement centrale (112) de l'aube correspondante (110).

11. Groupe d'aubes (100) ou moteur à turbine à gaz (20) selon une quelconque revendication précédente, dans lequel le plénum (150) comprend un vide dans la plate-forme interne (130) et un couvercle (170) fixé à une ouverture dans le vide.

12. Groupe d'aubes (100) ou moteur à turbine à gaz (20) selon la revendication 11, dans lequel le couvercle (170) n'a pas d'ouverture.

13. Groupe d'aubes (100) ou moteur à turbine à gaz (20) selon la revendication 11 ou 12, dans lequel l'ouverture dans le vide est au niveau d'une surface orientée radialement vers l'intérieur (156) de la plate-forme interne (130).

14. Groupe d'aubes (100) ou moteur à turbine à gaz (20) selon une quelconque revendication précédente, dans lequel la pluralité d'aubes (110) est constituée de la première aube (110) et de la seconde aube (110).
